# EUROPEAN PATENT APPLICATION

(11) **EP 4 535 446 A1**
(43) Date of publication of application: **09.04.2025**
(21) Application number: 22953435.9
(22) Date of filing: 01.08.2022
(51) Int. Cl.: H01M 4/13, H01M 10/058, H01M 50/536

(54) **ELECTROCHEMICAL DEVICE AND ELECTRONIC DEVICE**

(71) Applicant: Ningde Amperex Technology Limited, Ningde, Fujian 352100 (CN)
(72) Inventor: YAN, Dongyang, Ningde, Fujian 352100 (CN)
(74) Representative: Icosa
(86) International application number: PCT/CN2022/109437
(87) International publication number: WO 2024/026618

(57) **Abstract**

An electrochemical device (100) is provided, including an electrode assembly (20) and a first conductive plate (30). The electrode assembly (20) includes a first electrode plate (21). The first electrode plate (21) includes a first current collector (210) and a first conductive material layer (211). The first current collector (210) includes a first surface (210a). The first conductive material layer (211) is disposed on the first surface (210a). The first conductive material layer (211) is provided with a first opening (2110). The first surface (210a) includes a first region (2100), where the first region (2100) is configured to be a region of the first surface (210a) exposed at the first opening (2110). The first conductive plate (30) is connected to the first region (2100). When viewed from a first direction, the first electrode plate (21) includes a first end edge (213) and a second end edge (214), and the first end edge (213) is provided with a first recess (2130). When viewed from the first direction, the first recess (2130) is spaced apart from the first region (2100), and the first recess (2130) overlaps with the first region (2100) in a second direction. When viewed from the first direction, the first conductive plate (30) covers a part of the first region (2100), a part of the first conductive material layer (211), and a part of the first recess (2130).

## Description

### TECHNICAL FIELD

This application relates to the field of energy storage technologies, and in particular, to an electrochemical device and an electronic device including such electrochemical device.

### BACKGROUND

Electrochemical devices (such as secondary batteries) are widely used in electronic products such as electronic mobile equipment, electric tools, and electric vehicles, and increasingly higher requirements are imposed on the service life of the electrochemical devices.

An electrochemical device typically includes an electrode assembly and a conductive plate electrically connected to the electrode assembly. In the event of mechanical abuse (such as extrusion or collision due to an external force), a protrusion on a surface of the conductive plate (such as a weld mark) may pierce a separator and cause a short circuit, thus shortening the service life of the electrochemical device.

### SUMMARY

Therefore, this application proposes an electrochemical device capable of prolonging the service life.

In addition, this application further provides an electronic device including such electrochemical device.

According to a first aspect of this application, an electrochemical device is provided, including an electrode assembly and a first conductive plate. The electrode assembly includes a first electrode plate. The first electrode plate includes a first current collector and a first conductive material layer. The first current collector includes a first surface. The first conductive material layer is disposed on the first surface. The first conductive material layer is provided with a first opening. The first surface includes a first region, where the first region is configured to be a region of the first surface exposed at the first opening. The first conductive plate is connected to the first region. When viewed from a first direction, the first electrode plate includes a first end edge and a second end edge disposed opposite to each other in a second direction, and the first electrode plate is provided with a first recess at the first end edge. When viewed from the first direction, the first recess is spaced apart from the first region. When viewed from the second direction, the first recess overlaps with the first region. When viewed from the first direction, the first conductive plate covers a part of the first region, the first conductive plate covers a part of the first conductive material layer, and the first conductive plate covers a part of the first recess. The first direction is perpendicular to the first region. The second direction is perpendicular to the first direction.

In this application, after the first recess is provided, a position with a larger thickness in the first electrode plate having the first conductive plate is a position of the first electrode plate with a double-sided coating on both sides of the first region when viewed from the first direction (hereinafter referred to as a first position), or a region overlapping with the first conductive plate between the first opening and the first recess (hereinafter referred to as a second position). This is conducive to reducing the overall thickness of the electrochemical device in the first direction and improving space utilization. In addition, in the event of mechanical abuse (such as collision or extrusion due to an external force), if a position to which the external force is applied overlaps with a protrusion on a surface of the first conductive plate (such as a weld mark), the position with a larger thickness in the first electrode plate can bear part of the external force, reducing the possibility of the protrusion piercing a separator and causing a short circuit, thereby prolonging the service life of the electrochemical device. In addition, if the first electrode plate wrinkles or bends under the action of the external force, the first recess can also provide a buffer space for the first conductive plate, reducing the possibility of the first conductive plate bending with the first electrode plate and undergoing breakage, thereby further prolonging the service life of the electrochemical device.

In some possible implementations, when viewed from the first direction, the first recess includes a first recess edge and a second recess edge disposed opposite to each other in a third direction, and a third recess edge connecting the first recess edge and the second recess edge. The first recess edge, the second recess edge, and the third recess edge enclose the first recess. The third direction is perpendicular to both the first direction and the second direction. The first recess with the above structure can provide a large buffer space for the first conductive plate in the event of mechanical abuse, thereby further prolonging the service life of the electrochemical device.

In some possible implementations, when viewed from the first direction, the first end edge includes a first connecting edge connecting to the first recess edge. The third recess edge and the first connecting edge both extend along the third direction. In the second direction, a distance from the first connecting edge to the third recess edge is a first distance L₁, a distance from the third recess edge to the first region is a second distance L₂, and the first distance L₁ is greater than the second distance L₂. A large first distance L₁ is conducive to increasing an area of the first recess and allows the first recess to provide a large buffer space for the first conductive plate in the event of mechanical abuse. When the second distance L₂ is small (in some embodiments, the first conductive material layer located between the first opening and the first recess is covered by the first layer and is difficult to implement capacity utilization, so that the amount of an active material that is difficult to implement capacity utilization is reduced when the second distance is reduced), under a condition that a size of the first electrode plate in the second direction is specified, the amount of another active material that can implement capacity utilization in the second direction is increased, thereby reducing the influence on the capacity of the electrochemical device.

In some possible implementations, 1 mm ≤ L₁ ≤ 6 mm, and 0.3 mm ≤ L₂ ≤ 4 mm. Setting the range of the first distance L₁ allows the first recess to provide a large buffer space for the first conductive plate in the event of mechanical abuse, and also reduces the influence on the capacity of the electrochemical device. Setting the range of the second distance L₂ allows the first conductive material layer located between the first opening and the first recess to effectively increase the height, and also reduces the influence on the capacity of the electrochemical device.

In some possible implementations, 0.1 ≤ L₂/L₁ ≤ 1. Setting a lower limit value of the ratio of the second distance L₂ to the first distance L₁ reduces the influence on the capacity of the electrochemical device and also allows this part of the first conductive material layer to effectively increase the height.

In some possible implementations, when viewed from the first direction, the first recess further includes a fourth recess edge and a fifth recess edge. The fourth recess edge connects the first recess edge and the third recess edge; and the fifth recess edge connects the second recess edge and the third recess edge. The fourth recess edge is curved; and the fifth recess edge is curved. Therefore, a smooth transition may be present between the first recess edge and the third recess edge and between the second recess edge and the third recess edge. This is conducive to reducing the burrs generated at the transition positions during cutting the first recess, thereby reducing the possibility of the burrs piercing the separator and causing a short circuit, and prolonging the service life of the electrochemical device. In addition, this can increase an area of the first conductive material layer located between the first opening and the first recess and capable of increasing the height, and this allows this part of the first conductive material layer to bear the external force in the event of mechanical abuse.

In some possible implementations, in the first direction, a thickness of the first conductive plate is less than a thickness of the first conductive material layer. Therefore, the position with a larger thickness in the first electrode plate of the first conductive plate is the first position. Therefore, in the event of mechanical abuse, if the position to which the external force is applied overlaps with the protrusion on the surface of the first conductive plate, the first position can preferentially bear part of the external force. In addition, when viewed from the first direction, the first position has a larger area than the second position, which is conducive to bearing greater external force in the event of mechanical abuse, thereby further prolonging the service life of the electrochemical device.

In some possible implementations, when viewed from the first direction, in the third direction, a distance from the first conductive plate to the first recess edge is a third distance L₃, a distance from the first conductive plate to the second recess edge is a fourth distance L₄, and the third distance L₃ is not equal to the fourth distance L₄.

In some possible implementations, the first electrode plate further includes a second conductive material layer. The first current collector further includes a second surface opposite to the first surface; and the second conductive material layer is disposed on the second surface. The second conductive material layer is provided with a second opening. The second surface includes a second region; and the second region is configured to be a region of the second surface exposed at the second opening. The first region overlaps with the second region in the first direction. When viewed from the second direction, the second region overlaps with the first recess. Thus, when the electrochemical device is charged, heat generated at the first conductive plate can be dissipated through the first region exposed at the first conductive plate and can also be transferred to the second region through a position where the first region and the second region overlap and then dissipated through the second region, reducing the possibility of local overheating of the first conductive plate.

In some possible implementations, the second region is spaced apart from the first recess in the second direction. Therefore, a part of the second conductive material layer located between the second opening and the first recess can also increase the height in the first direction. When the external force is applied to the back of the electrochemical device, this part of the second conductive material layer can also bear part of the external force, reducing the possibility of the protrusion on the surface of the first conductive plate piercing the separator and causing a short circuit, thereby prolonging the service life of the electrochemical device.

In some possible implementations, when viewed from the first direction, the first region includes a first edge and a second edge disposed opposite to each other in the third direction. The first edge and the first recess edge are located on a first side of the first conductive plate. The second edge and the second recess edge are located on a second side of the first conductive plate opposite to the first side. When viewed from the first direction, the second region includes a third edge and a fourth edge disposed opposite to each other in the third direction. The first edge and the third edge are located on the first side of the first conductive plate. The second edge and the fourth edge are located on the second side of the first conductive plate. When viewed from the first direction, the first edge and the third edge are staggered with each other, and/or the second edge and the fourth edge are staggered with each other. Therefore, the first electrode plate has thickness transitions at positions corresponding to the first edge and the third edge, and/or the first electrode plate has thickness transitions at positions corresponding to the second edge and the fourth edge. The above thickness transitions are conducive to reducing the possibility of the first current collector undergoing damage such as wrinkles during rolling, thereby reducing the possibility of poor appearance or poor internal interface of the electrochemical device. Furthermore, in the event of collision or extrusion due to the external force, the above thickness transitions can also reduce the possibility of tearing of the first current collector. Therefore, the service life of the electrochemical device is prolonged.

In some possible implementations, when viewed from the first direction, the second region fully covers the first region. Therefore, when viewed from the first direction, the protrusion of the first conductive plate can fully fall within a range of the second region, reducing the possibility of a conductive material falling off and causing a short circuit when the protrusion falls on the second conductive material layer, thereby prolonging the service life of the electrochemical device.

In some possible implementations, the second region connects to the first recess. Therefore, there is no second conductive material layer between the second region and the first recess, reducing the amount of the conductive material used (in some embodiments, this part of the conductive material is covered by the second layer and is difficult to implement capacity utilization). In addition, this reduces the possibility of the conductive material falling off and causing a short circuit when the protrusion on the surface of the first conductive plate falls on this part of the second conductive material layer, thereby prolonging the service life of the electrochemical device.

In some possible implementations, the electrochemical device further includes a first layer containing a first insulating material. The first layer is adhered to the first region. The first conductive plate is disposed between the first region and the first layer. The first layer can reduce the risk of the protrusion on the surface of the first conductive plate piercing the separator and causing a short circuit.

In some possible implementations, when viewed from the first direction, the first layer fully covers the first opening and the first recess; and the first layer extends beyond the first end edge in the second direction. Thus, the first layer can also cover the burrs generated at the first end edge during cutting first current collector, reducing the possibility of the burrs piercing the separator and causing a short circuit.

In some possible implementations, the first conductive plate is welded to the first region, so that a high connection strength is present between the first conductive plate and the first region.

In some possible implementations, the electrode assembly is a wound structure, and the first electrode plate is a positive electrode plate.

This application further provides an electronic device including the foregoing electrochemical device. The electronic device is powered by the electrochemical device, and the electrochemical device has a long service life.

### BRIEF DESCRIPTION OF DRAWINGS

FIG. 1 is a schematic diagram of an overall structure of an electrochemical device according to an embodiment of this application.
FIG. 2A is a cross-sectional view of the electrochemical device shown in FIG. 1 along II-II.
FIG. 2B is an enlarged view of an electrode assembly of the electrochemical device shown in FIG. 2A at position A.
FIG. 3 is a front view of a first electrode plate of the electrode assembly shown in FIG. 2A in some embodiments.
FIG. 4 is a rear view of the first electrode plate shown in FIG. 3.
FIG. 5 is a front view of the first electrode plate shown in FIG. 3 after removing a first layer.
FIG. 6 is a front view of the first electrode plate shown in FIG. 3 in some other embodiments.
FIG. 7A is a front view of the first electrode plate shown in FIG. 3 in some other embodiments.
FIG. 7B is a front view of the first electrode plate shown in FIG. 3 in some other embodiments.
FIG. 8 is a front view of the first electrode plate shown in FIG. 3 in some other embodiments.
FIG. 9 is a front view of the first electrode plate shown in FIG. 3 in some other embodiments.
FIG. 10A is a cross-sectional view of the first electrode plate shown in FIG. 3 along X-X in some embodiments.
FIG. 10B is a cross-sectional view of the first electrode plate shown in FIG. 3 along X-X in some other embodiments.
FIG. 11 is a cross-sectional view of the first electrode plate shown in FIG. 3 along XI-XI.
FIG. 12 is a cross-sectional view of the first electrode plate shown in FIG. 3 along XII-XII.
FIG. 13 is a front view of the first electrode plate shown in FIG. 3 in some other embodiments.
FIG. 14 is a front view of the first electrode plate shown in FIG. 3 in some other embodiments.
FIG. 15 is a rear view of a first electrode plate in an electrochemical device according to another embodiment of this application.
FIG. 16 is a cross-sectional view of the first electrode plate shown in FIG. 15 along XVI-XVI.
FIG. 17 is a schematic diagram of an overall structure of an electronic device according to an embodiment of this application.

### Reference signs of main components

| | |
|---|---|
| Electronic device | 1 |
| Housing | 10 |
| Electrode assembly | 20 |
| First electrode plate | 21 |
| Second electrode plate | 22 |
| Separator | 23 |
| First conductive plate | 30 |
| Protrusion | 30a, 30b, 210d |
| Depression | 30c, 210c |
| First side | 30A |
| Second side | 30B |
| Third side | 30C |
| Fourth side | 30D |
| First connecting region | 31 |
| Second connecting region | 32 |
| Third connecting region | 33 |
| Second conductive plate | 40 |
| First layer | 50 |
| First edge | 51 |
| Second edge | 52 |
| Third edge | 53 |
| Fourth edge | 54 |
| Second layer | 60 |
| Electrochemical device | 100 |
| First wall | 111 |
| Second wall | 112 |
| First current collector | 210 |
| First surface | 210a |
| Second surface | 210b |
| First conductive material layer | 211 |
| Second conductive material layer | 212 |
| First end edge | 213 |
| First connecting edge | 213a |
| Second connecting edge | 213b |
| Second end edge | 214 |
| Second current collector | 220 |
| Third surface | 220a |
| Fourth surface | 220b |
| Third conductive material | 221 |
| layer | |
| Fourth conductive material | 222 |
| layer | |
| First region | 2100 |
| Second region | 2100' |
| First edge | 2101 |
| Second edge | 2102 |
| Fifth edge | 2103 |
| Sixth edge | 2104 |
| Third edge | 2105 |
| Fourth edge | 2106 |
| Seventh edge | 2107 |
| Eighth edge | 2108 |
| First opening | 2110 |
| Second opening | 2120 |
| First recess | 2130 |
| First recess edge | 2131 |
| Second recess edge | 2132 |
| Third recess edge | 2133 |
| Fourth recess edge | 2134 |
| Fifth recess edge | 2135 |
| Winding center axis | C |
| Winding direction | D |
| First direction | D₁ |
| Second direction | D₂ |
| Third direction | D₃ |
| First position | P₁ |
| Second position | P₂ |
| Thickness | T₁, T₂ |
| First distance | L₁ |
| Second distance | L₂ |
| Third distance | L₃ |
| Fourth distance | L₄ |
| Fifth distance | L₅ |
| Sixth distance | L₆ |

This application will be further described with reference to the accompanying drawings in the following specific embodiments.

### DETAILED DESCRIPTION

The following describes the technical solutions in some embodiments of this application clearly and in detail. Apparently, the described embodiments are only some rather than all embodiments of this application. Unless otherwise defined, all technical and scientific terms used herein shall have the same meanings as commonly understood by persons skilled in the art to which this application pertains. The terms used in the specification of this application are for description of specific embodiments only without any intention to limit this application.

The following describes some embodiments of this application in detail. However, this application may be embodied in many different implementations and should not be construed as being limited to some illustrative embodiments described herein. Rather, these illustrative embodiments are provided so that this application can be conveyed to persons skilled in the art thoroughly and in detail.

In addition, in the accompanying drawings, sizes or thicknesses of various components and layers may be exaggerated for brevity and clarity. Throughout the text, the same numerical values represent the same elements. As used herein, the term "and/or" includes any and all combinations of one or more of the associated listed items. In addition, it should be understood that when an element A is referred to as being "connected to" an element B, the element A can be directly connected the element B or an intermediate element C may be present therebetween such that the element A and the element B are indirectly connected to each other.

Further, "may" used when describing some embodiments of this application relates to "one or more embodiments of this application".

The technical terms used herein are merely intended to describe specific embodiments without any intention to limit this application. As used herein, the singular forms are intended to include the plural forms as well, unless otherwise clearly specified in the context. It should be further understood that the term "include" used in this specification indicates the presence of stated features, numerical values, steps, operations, elements, and/or components but does not preclude the presence or addition of one or more other features, numerical values, steps, operations, elements, components, and/or combinations thereof.

Spatial related terms such as "above" may be used herein for ease of description to describe the relationship between one element or feature and another element (a plurality of elements) or feature (a plurality of features) as illustrated in the figures. It should be understood that spatial related terms are intended to include different orientations of equipment or devices in use or operation in addition to the orientations depicted in the figures. For example, if the equipment in the figures is turned over, elements described as being "above" or "over" other elements or features would then be oriented "below" or "beneath" the other elements or features. Thus, the example term "above" may include both the orientations above and below. It should be understood that although the terms such as first, second, and third may be used herein to describe various elements, components, regions, layers, and/or parts, these elements, components, regions, layers, and/or parts should not be limited by these terms. These terms are used to distinguish one element, component, region, layer, or part from another element, component, region, layer, or part. Therefore, the first element, component, region, layer, or part discussed below may be referred to as the second element, component, region, layer, or part without departing from the teachings of the illustrative embodiments.

In this application, design relationships between parameter values that are greater than, less than, or not equal to each other need to exclude the reasonable errors of measurement equipment.

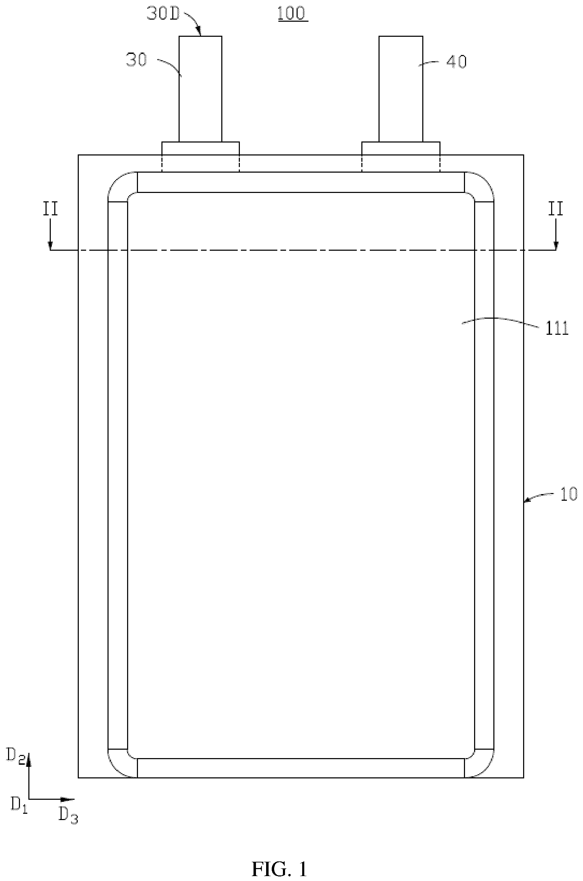

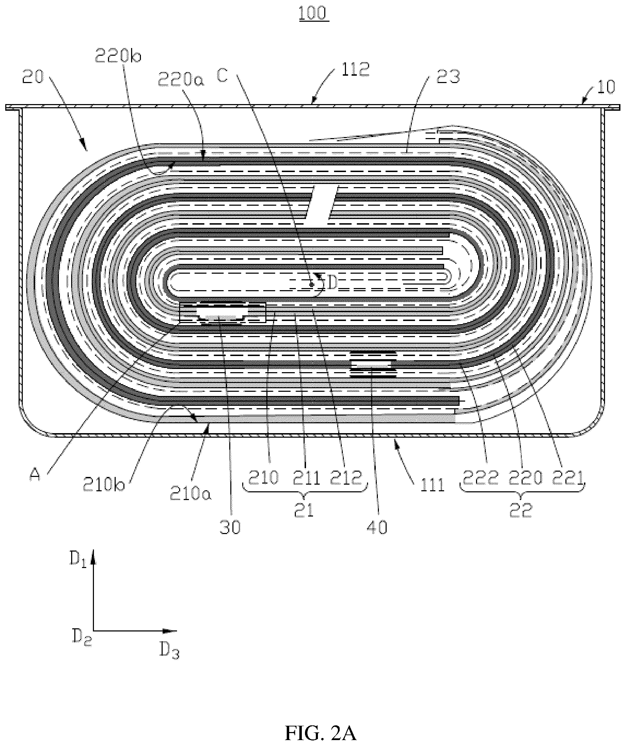

Referring to FIGs. 1 and 2A, an embodiment of this application provides an electrochemical device 100 including a housing 10, an electrode assembly 20, a first conductive plate 30, and a second conductive plate 40. The electrode assembly 20 is located in the housing 10. The first conductive plate 30 and the second conductive plate 40 are both electrically connected to the electrode assembly 20 and extend out of the housing 10 from the inside of the housing 10. The housing 10 may be a packaging bag obtained after packaging by using a packaging film (such as an aluminum-plastic film), that is, the electrochemical device 100 may be a soft pack battery. In some other embodiments, the electrochemical device 100 is not limited to a soft pack battery and may alternatively be a steel shell battery or an aluminum shell battery. FIG. 2A shows one electrode assemblies 20. In another embodiment, a plurality of electrode assemblies 20 may alternatively be provided, and the plurality of electrode assemblies 20 are located in the housing 10 and electrically connected in parallel or in series.

As shown in FIG. 2A, the electrode assembly 20 may be a wound structure. The electrode assembly 20 includes a first electrode plate 21, a second electrode plate 22, and a separator 23, where the separator 23 is disposed between the first electrode plate 21 and the second electrode plate 22. The first electrode plate 21, the separator 23, and the second electrode plate 22 are stacked and then wound sequentially to form the electrode assembly 20. As shown in FIG. 2A, the electrode assembly 20 has a winding center axis C perpendicular to the plane of the paper. A winding direction D is a direction rotating counterclockwise around the winding center axis C as shown in FIG. 2A. In some other embodiments, the winding direction D may alternatively be a direction rotating clockwise. In this application, a three-dimensional coordinate system is established based on a first direction D₁, a second direction D₂, and a third direction D₃ perpendicular to each other. The first direction D₁ is a direction perpendicular to a surface of the first conductive plate 30. The second direction D₂ is a direction along which the first conductive plate 30 protrudes from the electrode assembly 20. In some embodiments, the second direction D₂ may alternatively be a direction of the winding center axis C. The third direction D₃ is a direction from the first conductive plate 30 to the second conductive plate 40. In some other embodiments, the electrode assembly 20 may alternatively be a laminated structure.

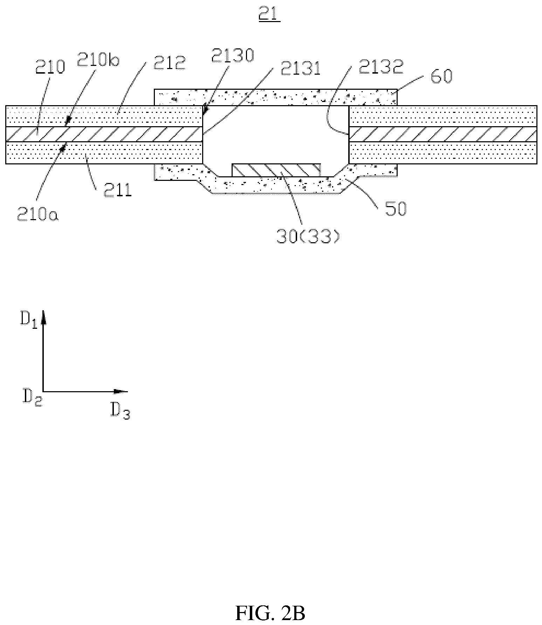

As shown in FIGs. 2A and 2B, the first electrode plate 21 includes a first current collector 210, a first conductive material layer 211, and a second conductive material layer 212. The first current collector 210 includes a first surface 210a and a second surface 210b disposed opposite to each other. The first conductive material layer 211 is disposed on the first surface 210a. The second conductive material layer 212 is disposed on the second surface 210b. As shown in FIG. 2A, the second electrode plate 22 includes a second current collector 220, a third conductive material layer 221, and a fourth conductive material layer 222. The second current collector 220 includes a third surface 220a and a fourth surface 220b disposed opposite to each other. The third conductive material layer 221 is disposed on the third surface 220a. The fourth conductive material layer 222 is disposed on the fourth surface 220b. The second conductive material layer 212 and the fourth conductive material layer 222 face each other across the separator 23. In some embodiments, as shown in FIG. 2A, after stacked and then wound, the first surface 210a of the first current collector 210 is farther from the winding center axis C than the second surface 210b, and the third surface 220a of the second current collector 220 is farther from the winding center axis C than the fourth surface 220b. It can be understood that in another embodiment, the first surface 210a of the first current collector 210 may alternatively be closer to the winding center axis C, and the third surface 220a of the second current collector 220 may alternatively be closer to the winding center axis C than the fourth surface 220b. In some embodiments, in the first direction D₁, a thickness range of the first current collector 210 may be 3 µm to 20 µm, a thickness range of the first material layer 211 may be 30 µm to 300 µm, and a thickness range of the second conductive material layer 212 may be 30 µm to 300 µm.

The first electrode plate 21 may be a positive electrode plate or a negative electrode plate. Correspondingly, the first current collector 210 may be a positive electrode current collector or a negative electrode current collector. The first conductive material layer 211 and the second conductive material layer 212 may both be positive electrode active material layers or negative electrode active material layers. The second electrode plate 22 may be a negative electrode plate or a positive electrode plate. Correspondingly, the second current collector 220 may be a negative electrode current collector or a positive electrode current collector. The third conductive material layer 221 and the fourth conductive material layer 222 may both be negative electrode active material layers or positive electrode active material layers. In some embodiments, the first electrode plate 21 is a positive electrode plate, and the second electrode plate 22 is a negative electrode plate. The positive electrode current collector may be an aluminum foil or a nickel foil, and the negative electrode current collector may be at least one of a copper foil, a nickel foil, or a carbon-based current collector.

The positive electrode active material layer contains a positive electrode active material, and the positive electrode active material includes a compound that can reversibly intercalate and deintercalate lithium ions (that is, a lithium intercalation compound). In some embodiments, the positive electrode active material may include a lithium transition metal composite oxide. The lithium transition metal composite oxide contains lithium and at least one element selected from cobalt, manganese, and nickel. In some embodiments, the positive electrode active material is selected from at least one of lithium cobaltate (LiCoO₂), a lithium nickel manganese cobalt ternary material (NCM), lithium manganate (LiMn₂O₄), lithium nickel manganate (LiNi_{0.5}Mn_{1.5}O₄), or lithium iron phosphate (LiFePO₄).

The negative electrode active material layer contains a negative electrode active material, and the negative electrode active material is a negative electrode active material known in the art that can reversibly intercalate and deintercalate active ions. This is not limited in this application. For example, the negative electrode active material includes but is not limited to a combination of one or more of graphite, soft carbon, hard carbon, carbon fiber, mesocarbon microbeads, a silicon-based material, a tin-based material, lithium titanate, or another metal capable of forming an alloy with lithium. The graphite may be a combination of one or more selected from a group consisting of artificial graphite, natural graphite, and modified graphite. The silicon-based material may be a combination of one or more selected from a group consisting of elemental silicon, a silicon-oxygen compound, a silicon-carbon composite, and a silicon alloy. The tin-based material may be a combination of one or more selected from a group consisting of elemental tin, a tin-oxygen compound, and a tin alloy.

The separator 23 includes at least one of polyethylene, polypropylene, polyvinylidene fluoride, polyethylene glycol terephthalate, polyimide, or aramid. For example, polyethylene includes at least one selected from high-density polyethylene, low-density polyethylene, or ultra-high molecular weight polyethylene. Polyethylene and polypropylene have a good effect on alleviating short circuits and can improve the stability of the electrochemical device through the turn-off effect.

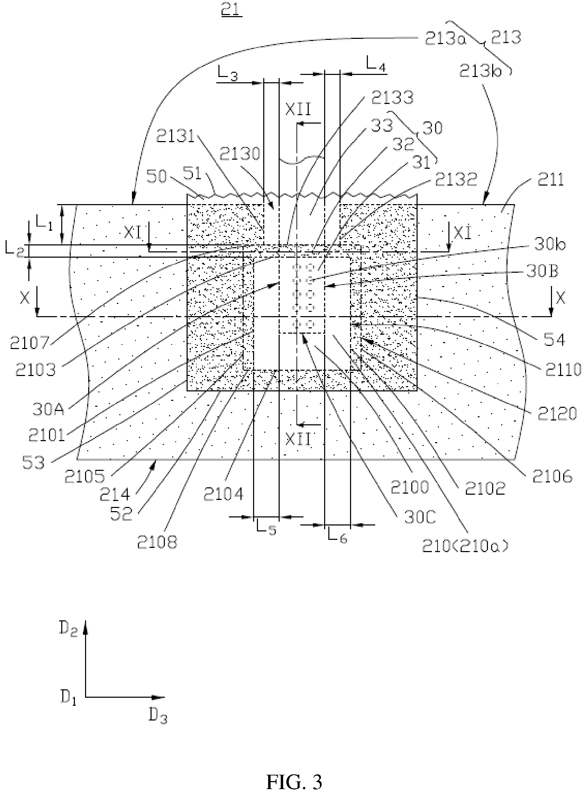

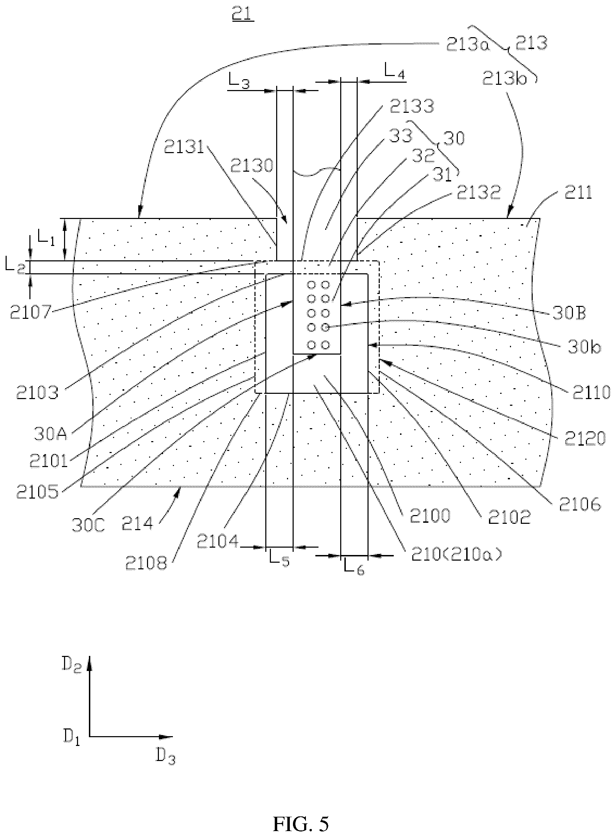

Referring to FIGs. 3 and 5, the first conductive material layer 211 includes a first opening 2110. The first surface 210a of the first current collector 210 includes a first region 2100. The first region 2100 is configured to be a region of the first surface 210a exposed at the first opening 2110. That is, the first region 2100 is exposed at the first opening 2110. In this case, the first direction D₁ may alternatively be a direction perpendicular to the first region 2100. In this application, the first opening 2110 is cleaned in the first conductive material layer 211 through a laser cleaning manner, so that the first region 2100 is exposed. Alternatively, a foam adhesive may be applied to the first region 2100 in advance, and after an active material is applied, heating is performed to make the foam adhesive fall off, thereby making the first region 2100 exposed. Alternatively, the active material on the first region 2100 can be directly scraped off with a scraper, thereby making the first region 2100 exposed. However, it can be understood that after laser cleaning or scraping with the scraper, a small amount of active material may still remain on the surface of the first region 2100. This is not limited in this application.

In some embodiments, when viewed from the first direction D₁, the first region 2100 and the first opening 2110 may both be rectangular. Specifically, the first region 2100 includes a first edge 2101 and a second edge 2102 disposed opposite to each other in the third direction D₃, and a fifth edge 2103 and a sixth edge 2104 disposed opposite to each other in the second direction D₂. The fifth edge 2103 is connected between the first edge 2101 and the second edge 2102, and the sixth edge 2104 is connected between the first edge 2101 and the second edge 2102. In some embodiments, the first edge 2101 and the second edge 2102 can both extend along the second direction D₂, the fifth edge 2103 and the sixth edge 2104 can both extend along the third direction D₃, and the first edge 2101, the second edge 2102, the fifth edge 2103, and the sixth edge 2104 may all be linear. In some other embodiments, when the first region 2100 is formed through manners such as laser cleaning, at least one of the first edge 2101, the second edge 2102, the fifth edge 2103, and the sixth edge 2104 may alternatively include a corrugated shape. This is not limited in this application. It can be understood that the first opening 2110 is a three-dimensional structure, but when viewed from the first direction D₁, the first opening 2110 includes a plurality of edges connected sequentially (not shown in the figure). When viewed from the first direction D₁, the first edge 2101, the second edge 2102, the fifth edge 2103, and the sixth edge 2104 of the first region 2100 respectively overlap with a plurality of edges of the first opening 2110.

When viewed from the first direction D₁, the first conductive plate 30 is connected to the first region 2100. A first side 30A of the first conductive plate 30 is defined as a position on a side of the first conductive plate 30 in the third direction D₃ when viewed from the first direction D₁. A second side 30B of the first conductive plate 30 is opposite to the first side 30A and is a position on another side of the first conductive plate 30 in the third direction D₃ when viewed from the first direction D₁. A third side 30C of the first conductive plate 30 is a position on a side of the first conductive plate 30 in the second direction D₂ when viewed from the first direction D₁. A fourth side 30D (shown in FIG. 1) of the first conductive plate 30 is opposite to the third side 30C and is a position on another side of the first conductive plate 30 in the second direction D₂ when viewed from the first direction D₁. For example, as shown in FIGs. 3 and 5, the first side 30A of the first conductive plate 30 may refer to a left side of the first conductive plate 30, the second side 30B of the first conductive plate 30 may refer to a right side of the first conductive plate 30, the third side 30C of the first conductive plate 30 may refer to a lower side of the first conductive plate 30, and the fourth side 30D of the first conductive plate 30 may refer to an upper side of the first conductive plate 30. The third side 30C of the first conductive plate 30 is located in the housing 10, and the fourth side 30D is located outside the housing 10. When viewed from the first direction D₁, in the third direction D₃, the first edge 2101 is located on the first side 30A of the first conductive plate 30, and the second edge 2102 is located on the second side 30B of the first conductive plate 30 opposite to the first side 30A. When viewed from the first direction D₁, the first conductive plate 30 covers a part of the fifth edge 2103, and the first conductive plate 30 overlaps with a part of the fifth edge 2103. To meet the demand for high-current charging of the electrochemical device 100, the first region 2100 may be disposed in a region of the first electrode plate 21 other than a winding head and a winding tail.

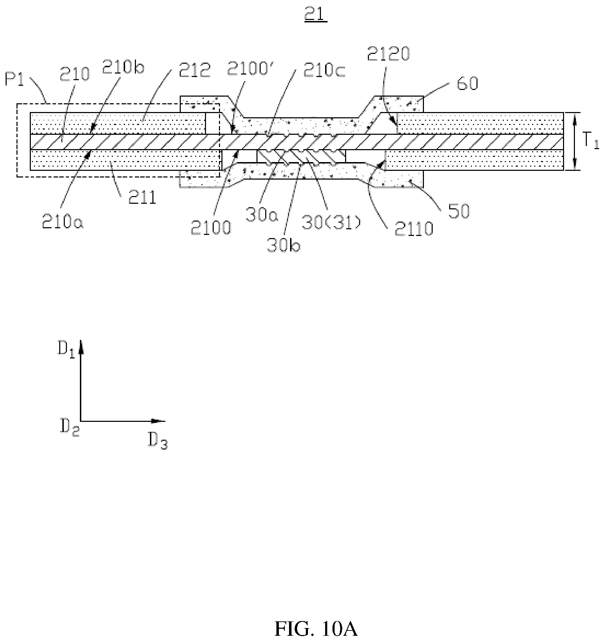

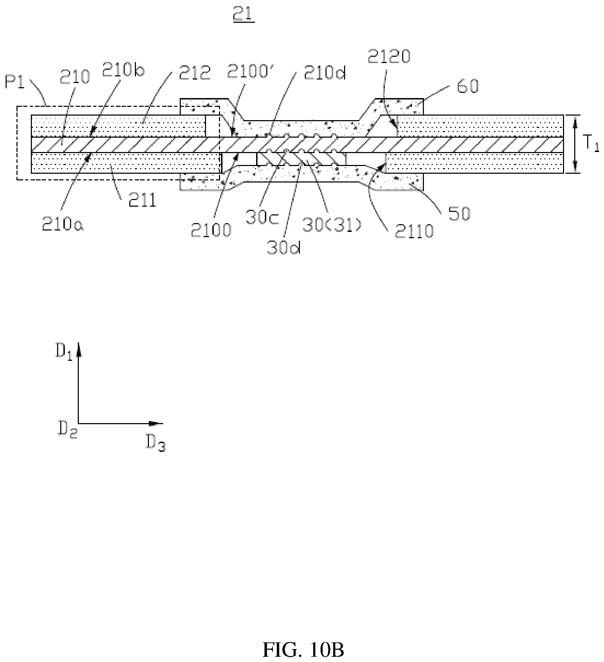

In some embodiments, the first conductive plate 30 is welded to the first region 2100, so that a high connection strength is present between the first conductive plate 30 and the first region 2100. Referring to FIG. 10A, in some embodiments, at least one protrusion 30a may be formed at a welding position between the first conductive plate 30 and the first region 2100. For example, a plurality of protrusions 30a arranged in a matrix may be formed at the welding position between the first conductive plate 30 and the first region 2100, and the protrusions 30a protrude from the first region 2100 to the first conductive plate 30. In addition, at least one protrusion 30b is correspondingly formed on a surface of the first conductive plate 30 facing away from the first region 2100. At least one depression 210c is correspondingly formed on the second surface 210b of the first current collector 210. The protrusions 30a and 30b and the depression 210c may be formed during the welding process (which may be referred to as weld marks in this case). However, this is not limited in this application. Referring to FIG. 10B, in some other embodiments, at least one depression 30c may also be formed at the welding position between the first conductive plate 30 and the first region 2100. For example, a plurality of depressions 30c arranged in a matrix may be formed at the welding position between the first conductive plate 30 and the first region 2100. The depression 30c is recessed from the first region 2100 to the first conductive plate 30. In addition, at least one depression 30d is correspondingly formed on the surface of the first conductive plate 30 facing away from the first region 2100, and at least one protrusion 210d is correspondingly formed on the second surface 210b of the first current collector 210. The depressions 30c and 30d and the protrusion 210d may be formed during the welding process (which may be referred to as weld marks in this case). However, this is not limited in this application. In another embodiment, the first conductive plate 30 may alternatively be connected to the first region 2100 through a conductive adhesive or another manner. In the first direction D₁, a thickness range of the first conductive plate 30 may be 10 µm to 150 µm, and a thickness range of the second conductive plate 40 may be 10 µm to 150 µm.

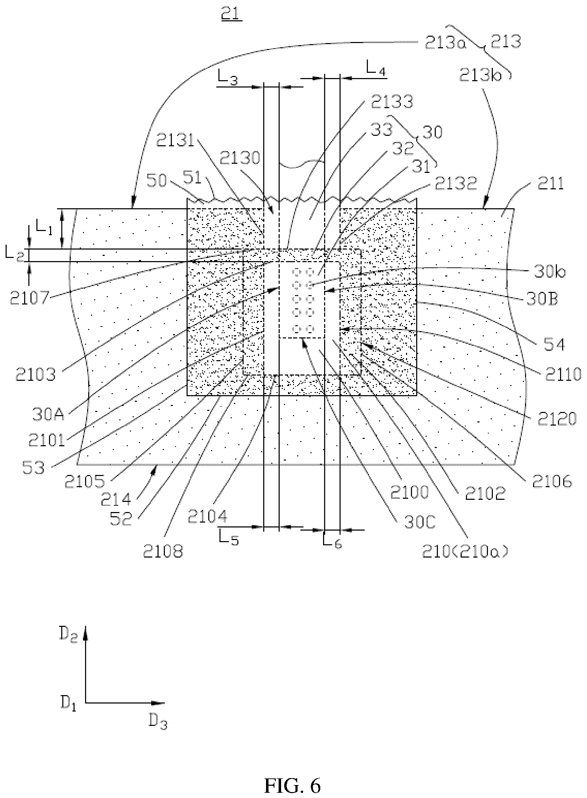

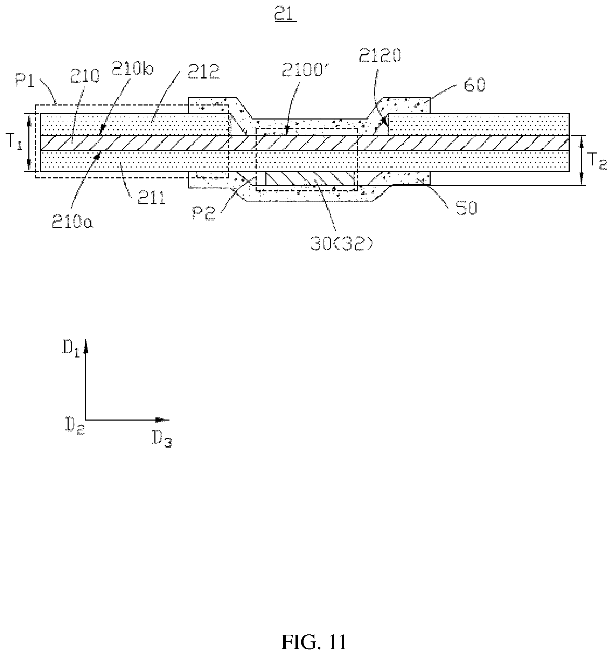

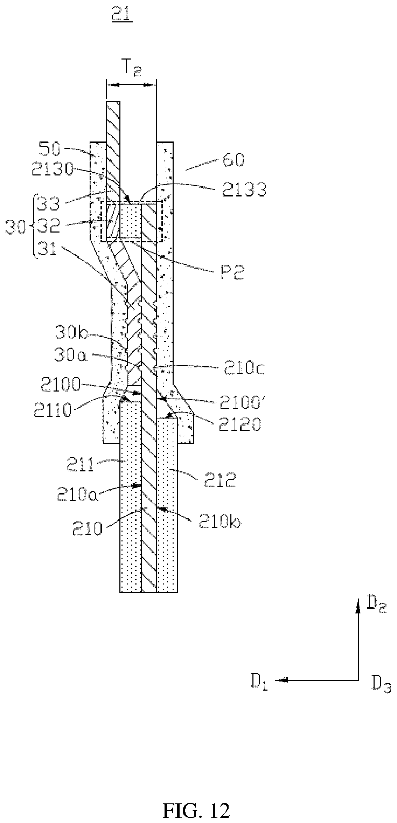

As shown in FIGs. 3 and 5, when viewed from the first direction D₁, the first electrode plate 21 includes a first end edge 213 and a second end edge 214 disposed opposite to each other in the second direction D₂. The second end edge 214, the sixth edge 2104, the fifth edge 2103, and the first end edge 213 are arranged sequentially in the second direction D₂. The second end edge 214, the sixth edge 2104, the fifth edge 2103, and the first end edge 213 being arranged sequentially in the second direction D₂ means that a virtual straight line set along the second direction D₂ successively passes through the second end edge 214, the sixth edge 2104, the fifth edge 2103, and the first end edge 213. The first end edge 213 and the second end edge 214 can both extend along the third direction D₃. The first electrode plate 21 is provided with a first recess 2130 at the first end edge 213. The first recess 2130 can be formed through a laser cutting manner or a die cutting manner. When viewed from the first direction D₁, the first opening 2110 is spaced apart from the first recess 2130, so that a part of the first conductive material layer 211 is present between the first opening 2110 and the first recess 2130. When viewed from the first direction D₁, the first opening 2110 may be spaced apart from the second end edge 214. When viewed from the second direction D₂, the first region 2100 overlaps with the first recess 2130. Here, overlapping means that the two are at least partially covered in a direction. For example, as shown in FIGs. 3 to 5, when viewed from the second direction D₂, the first recess 2130 covers a part of the first region 2100. For another example, as shown in FIG. 6, in some other embodiments, when viewed from the second direction D₂, the first recess 2130 fully covers the first region 2100, and the first region 2100 also fully covers the first recess 2130 in the second direction D₂ (that is, the two overlap each other). When viewed from the first direction D₁, the first conductive plate 30 covers a part of the first region 2100, and the first conductive plate 30 also covers a part of the first conductive material layer 211 (that is, the first conductive plate 30 covers this part of the first conductive material layer 211 located between the first opening 2110 and the first recess 2130), and the first conductive plate 30 also covers a part of the first recess 2130. Specifically, the first conductive plate 30 includes a first connecting region 31, a second connecting region 32, and a third connecting region 33 connected sequentially in the second direction D₂. When viewed from the first direction D₁, the first connecting region 31 covers a part of the first region 2100, and a weld mark may be formed on the first connecting region 31; the second connecting region 32 covers a part of the first conductive material layer 211; and the third connecting region 33 covers a part of the first recess 2130. The third connecting region 33 extends beyond the first end edge 213 in the second direction D₂ and further extends out of the housing 10. The first connecting region 31 is a position where the current flows through when the electrochemical device 100 is charged, and heat generated in the first connecting region 31 when the electrochemical device 100 is charged can be dissipated through the first region 2100 exposed at the first connecting region 31. Referring to FIGs. 11 and 12, it can be understood that this part of the first conductive material layer 211 present between the first opening 2110 and the first recess 2130 can increase the height in the first direction D₁, and the presence of this part of the first conductive material layer 211 reduces the height difference in the first direction D₁ with a weld mark (such as the protrusion 30b), and even this part of the first conductive material layer 211 may be higher than the weld mark in the first direction D₁. Therefore, in the event of mechanical abuse, if a position to which the external force is applied overlaps with a weld mark of the first conductive plate 30, especially when the external force is applied to the front of the electrochemical device 100 (for example, the housing 10 faces a first wall 111 of the first region 2100 as shown in FIG. 2A), this part of the first conductive material layer 211 capable of increasing the height can bear part of the external force, reducing the possibility of the weld mark piercing the separator 23 and causing a short circuit due to contact with the second electrode plate 22, thereby prolonging the service life of the electrochemical device 100.

As shown in FIGs. 3 and 5, in some embodiments, the first recess 2130 includes a first recess edge 2131, a second recess edge 2132, and a third recess edge 2133. The first recess edge 2131 and the second recess edge 2132 are disposed opposite to each other in the third direction D₃. The first recess edge 2131 and the second recess edge 2132 can both extend along the second direction D₂, and the third recess edge 2133 can extend along the third direction D₃. When the first recess edge 2131 extends along the second direction D₂, the first recess edge 2131 may be parallel to the second direction D₂ or may be inclined relative to the second direction D₂ (that is, an included angle between the first recess edge 2131 and the second direction D₂ is less than 90°), but the overall first recess edge 2131 is not parallel to the third direction D₃. The second recess edge 2132 extends along the second direction D₂ in the same way. The third recess edge 2133 connects the first recess edge 2131 and the second recess edge 2132. The first recess edge 2131, the second recess edge 2132, and the third recess edge 2133 enclose the first recess 2130. When viewed from the first direction D₁, the first opening 2110 is spaced apart from the third recess edge 2133 of the first recess 2130. When viewed from the first direction D₁, the first edge 2101 and the first recess edge 2131 are both located on the first side 30A of the first conductive plate 30, the second edge 2102 and the second recess edge 2132 are both located on the second side 30B of the first conductive plate 30, and the first conductive plate 30 covers a part of the third recess edge 2133. In some specific embodiments, when viewed from the first direction D₁, the first recess 2130 may be approximately rectangular, and the first recess edge 2131, the second recess edge 2132, and the third recess edge 2133 are all linear. When viewed from the first direction D₁, a virtual boundary line between the first connecting region 31 and the second connecting region 32 overlaps with the fifth edge 2103, and a virtual boundary line between the second connecting region 32 and the third connecting region 33 overlaps with the third recess edge 2133.

Further, when viewed from the first direction D₁, the first end edge 213 includes a first connecting edge 213a connecting to the first recess edge 2131 and a second connecting edge 213b connecting to the second recess edge 2132. The first connecting edge 213a and the second connecting edge 213b can both extend along the third direction D₃. When viewed from the first direction D₁, the first connecting edge 213a is located on the first side 30A of the first conductive plate 30, and the second connecting edge 213b is located on the second side 30B of the first conductive plate 30.

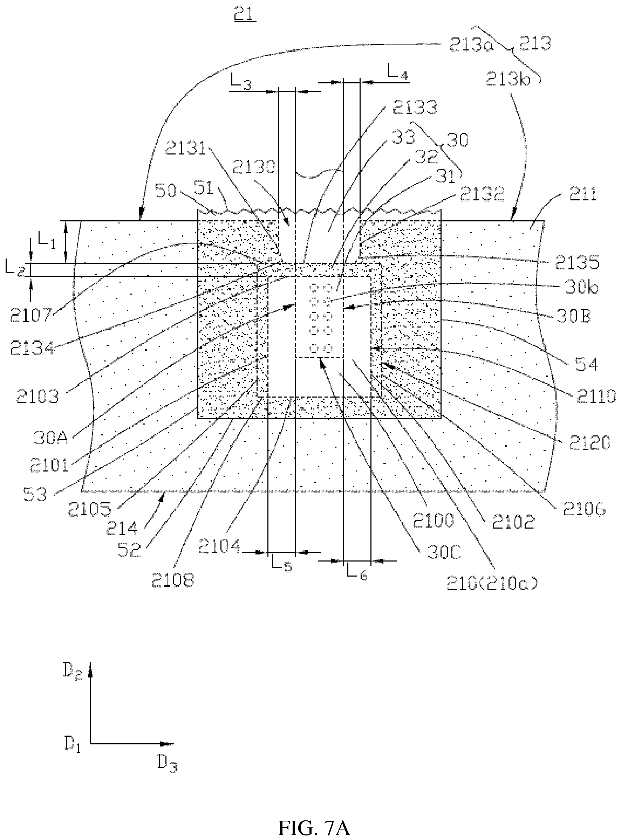

As shown in FIG. 7A, in some other embodiments, a shape of the first recess 2130 may alternatively be changed. For example, when viewed from the first direction D₁, the first recess 2130 may alternatively be approximately U-shaped. In this case, the first recess 2130 includes a first recess edge 2131, a second recess edge 2132, a third recess edge 2133, a fourth recess edge 2134, and a fifth recess edge 2135. The first recess edge 2131 and the second recess edge 2132 are disposed opposite to each other in the third direction D₃. The first recess edge 2131 and the second recess edge 2132 can both extend along the second direction D₂, and the third recess edge 2133 can extend along the third direction D₃. The fourth recess edge 2134 connects the first recess edge 2131 and the third recess edge 2133, and the fourth recess edge 2134 is curved. The fifth recess edge 2135 connects the second recess edge 2132 and the third recess edge 2133, and the fifth recess edge 2135 is curved. The first recess edge 2131, the second recess edge 2132, the third recess edge 2133, the fourth recess edge 2134, and the fifth recess edge 2135 enclose the first recess 2130. In some specific embodiments, the first recess edge 2131, the second recess edge 2132, and the third recess edge 2133 are all linear, and the fourth recess edge 2134 and the fifth recess edge 2135 are both arc-shaped and protrude away from the first recess 2130. In some other embodiments, the third recess edge 2133 may alternatively be arc-shaped. With the provision of the curved fourth recess edge 2134 and fifth recess edge 2135, a smooth transition is present between the first recess edge 2131 and the third recess edge 2133 and between the second recess edge 2132 and the third recess edge 2133. This is conducive to reducing the burrs generated at the transition positions during cutting the first recess 2130, thereby reducing the possibility of the burrs piercing the separator 23 and causing a short circuit due to contact with the second electrode plate 22, and prolonging the service life of the electrochemical device 100. In addition, the provision of the curved fourth recess edge 2134 and fifth recess edge 2135 can increase an area of the first conductive material layer 211 located between the first opening 2110 and the first recess 2130 and capable of increasing the height. This allows this part of the first conductive material layer 211 to bear the external force in the event of mechanical abuse.

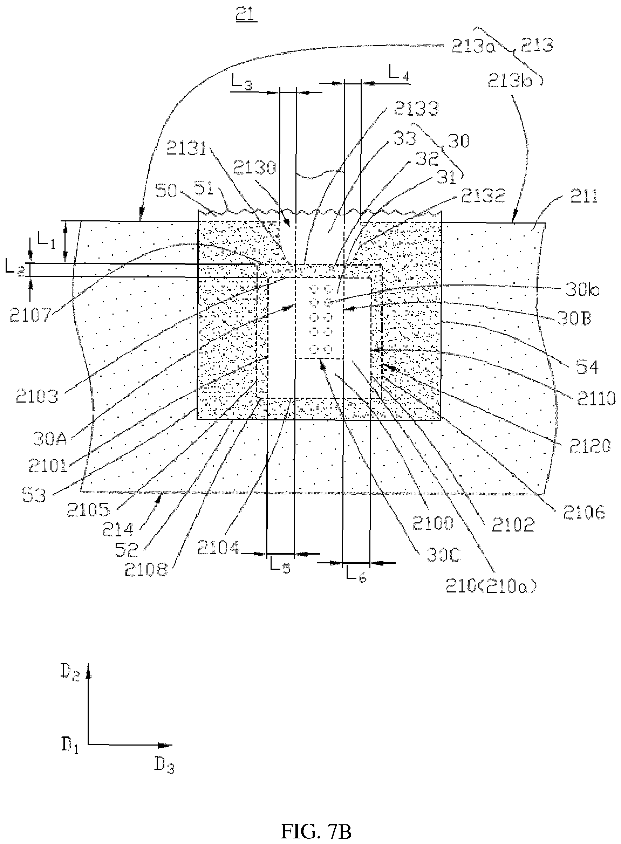

As shown in FIG. 7B, in some other embodiments, the first recess edge 2131 can be curved, and the second recess edge 2132 can also be curved. In some specific embodiments, the first recess edge 2131 is arc-shaped and protrudes away from the first recess 2130. The second recess edge 2132 is also arc-shaped and protrudes away from the first recess 2130. In this case, a smooth transition may also be present between the first recess edge 2131 and the third recess edge 2133 and between the second recess edge 2132 and the third recess edge 2133. This is conducive to reducing the burrs generated at the transition positions during cutting the first recess 2130, thereby reducing the possibility of the burrs piercing the separator 23 and causing a short circuit due to contact with the second electrode plate 22, and prolonging the service life of the electrochemical device 100.

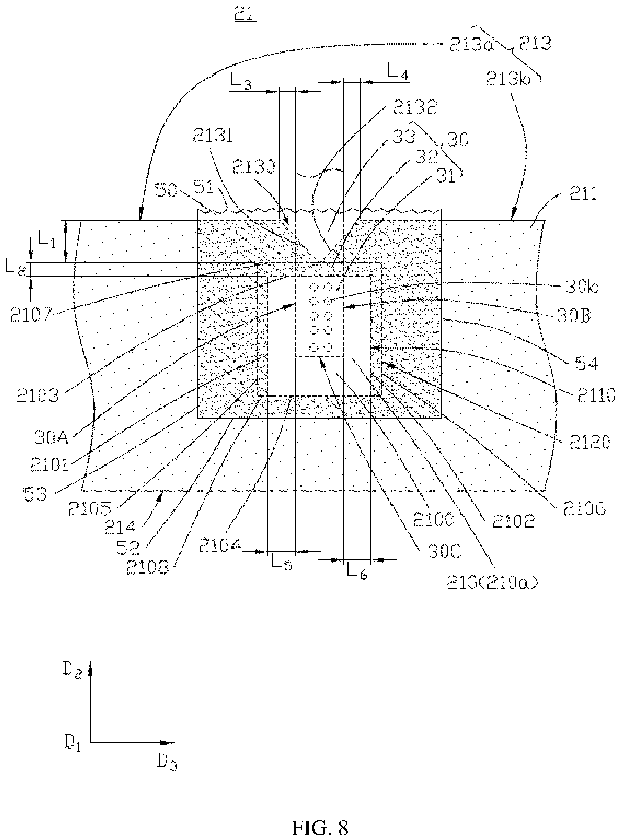

As shown in FIG. 8, in some other embodiments, when viewed from the first direction D₁, the first recess 2130 may alternatively be approximately V-shaped. In this case, the first recess 2130 includes only the first recess edge 2131 and the second recess edge 2132. The first recess edge 2131 and the second recess edge 2132 can both extend away from the second direction D₂. The first recess edge 2131 is directly connected to the second recess edge 2132, and the first recess edge 2131 and the second recess edge 2132 enclose the first recess 2130. In some specific embodiments, the first recess edge 2131 and the second recess edge 2132 are both linear.

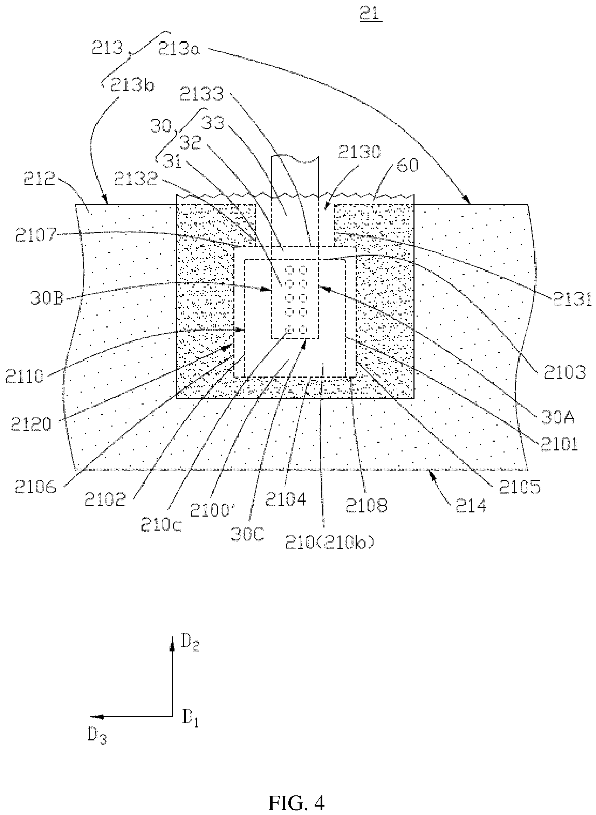

Referring to FIG. 4, in some embodiments, the second surface 210b of the first current collector 210 includes a second region 2100'. The second conductive material layer 212 includes a second opening 2120. The second region 2100' is configured to be a region of the second surface 210b exposed at the second opening 2120. That is, the second region 2100' is exposed at the second opening 2120. When viewed from the first direction D₁, the first region 2100 and the second region 2100' overlap. Thus, when the electrochemical device 100 is charged, heat generated at the first conductive plate 30 can be dissipated through the first region 2100 exposed at the first connecting region 31 and can also be transferred to the second region 2100' through a position where the first region 2100 and the second region 2100' overlap and then dissipated through the second region 2100', reducing the possibility of local overheating of the first conductive plate 30. When viewed from the second direction D₂, the second region 2100' overlaps with the first recess 2130.

In some embodiments, the second region 2100' may connect to the first recess 2130. Therefore, when viewed from the first direction D₁, there is no second conductive material layer 212 between the second region 2100' and the first recess 2130. Therefore, the first electrode plate 21 located between the first opening 2110 and the first recess 2130 is a single-sided coating region.

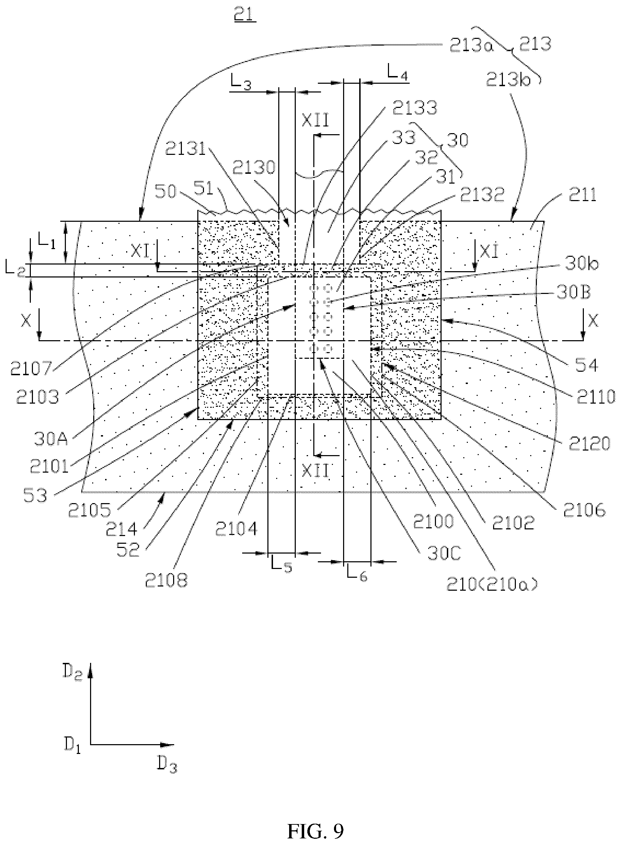

In some embodiments, when viewed from the first direction D₁, the second region 2100' and the second opening 2120 may both be rectangular. The second region 2100' includes a third edge 2105 and a fourth edge 2106 disposed opposite to each other in the third direction D₃, and a seventh edge 2107 and an eighth edge 2108 disposed opposite to each other in the second direction D₂. The seventh edge 2107 is connected between the third edge 2105 and the fourth edge 2106, and the eighth edge 2108 is connected between the third edge 2105 and the fourth edge 2106. The third edge 2105 and the fourth edge 2106 can both extend along the second direction D₂, and the seventh edge 2107 and the eighth edge 2108 can both extend along the third direction D₃. As shown in FIGs. 3 to 5, when viewed from the first direction D₁, the first edge 2101 and the third edge 2105 are located on the first side 30A of the first conductive plate 30, and the second edge 2102 and the fourth edge 2106 are located on the second side 30B of the first conductive plate 30. When viewed from the first direction D₁, the first conductive plate 30 covers the seventh edge 2107. When viewed from the first direction D₁, the sixth edge 2104 may overlap with the eighth edge 2108. In some other embodiments, as shown in FIG. 9, the sixth edge 2104 and the eighth edge 2108 may alternatively be staggered with each other in the second direction D₂. In some embodiments, as shown in FIGs. 3 to 5, the sixth edge 2104 overlaps with the eighth edge 2108. The second region 2100' connects to the first recess 2130, so that the fifth edge 2103 and the seventh edge 2107 are staggered with each other in the second direction D₂, and the seventh edge 2107 is closer to the first end edge 213 than the fifth edge 2103. When viewed from the first direction D₁, the seventh edge 2107 overlaps with the third recess edge 2133. Therefore, in the second direction D₂, the second end edge 214, the eighth edge 2108, the fifth edge 2103, the seventh edge 2107 (the third recess edge 2133), and the first end edge 213 are arranged sequentially. Since there is no second conductive material layer 212 between the second region 2100' and the first recess 2130, the amount of the conductive material used is reduced. In addition, this reduces the possibility of the conductive material falling off and causing a short circuit when the weld mark (such as the depression 210c shown in FIG. 10A or the protrusion 210d shown in FIG. 10B) extends beyond the fifth edge 2103 and falls onto this part of the second conductive material layer 212, thereby prolonging the service life of the electrochemical device 100. It can be understood that the second opening 2120 is a three-dimensional structure, but when viewed from the first direction D₁, the second opening 2120 includes a plurality of edges connected sequentially (not shown in the figure). When viewed from the first direction D₁, the third edge 2105, the fourth edge 2106, the seventh edge 2107, and the eighth edge 2108 of the second region 2100' respectively overlap with a plurality of edges of the second opening 2120.

It can be understood that if the first recess 2130 is not provided, after the first conductive plate 30 is connected to the first region 2100, a position with a larger thickness in the first electrode plate 21 having the first conductive plate 30 should be, when viewed from the first direction D₁, a region where the first conductive material layer 211, the first current collector 210, and the second conductive material layer 212 overlap with the first conductive plate 30 (including a total thickness of the first conductive plate 30, the first conductive material layer 211, the first current collector 210, and the second conductive material layer 212).

As shown in FIGs. 10A to 12, in this application, after the first recess 2130 is provided, the position with a larger thickness in the first electrode plate 21 having the first conductive plate 30 should be, when viewed from the first direction D₁, a position of the first electrode plate 21 with a double-sided coating on both sides of the first region 2100 in the third direction D₃ (hereinafter referred to as a first position P₁, where a thickness T₁ of the first position P₁ includes a total thickness of the first conductive material layer 211, the first current collector 210, and the second conductive material layer 212), or a region overlapping with the first conductive plate 30 between the first opening 2110 and the first recess 2130 (hereinafter referred to as a second position P₂, where a thickness T₂ of the second position P₂ includes a total thickness of the first conductive plate 30, the first conductive material layer 211, and the first current collector 210).

Therefore, in this application, the provision of the first recess 2130 is conducive to reducing the overall thickness of the electrochemical device 100 in the first direction D₁ and improving space utilization. In addition, in the event of mechanical abuse, if the position to which the external force is applied overlaps with the weld mark of the first conductive plate 30, especially when the external force is applied to the front of the electrochemical device 100, the first position P₁ or the second position P₂ with a larger thickness in the first electrode plate 21 can bear part of the external force, reducing the possibility of the weld mark (such as the protrusion 30b) piercing the separator 23 and causing a short circuit due to contact with the second electrode plate 22, thereby prolonging the service life of the electrochemical device 100. In addition, the first electrode plate 21 may wrinkle under the action of the external force, allowing the first end edge 213 or second end edge 214 of the first electrode plate 21 to bend toward the middle of the first electrode plate 21. In this case, the first recess 2130 can provide a buffer space for the third connecting region 33 of the first conductive plate 30, reducing the possibility of the first conductive plate 30 bending with the first electrode plate 21 and undergoing breakage, thereby further prolonging the service life of the electrochemical device 100. Especially, as shown in FIGs. 3, 7A, and 7B, when the first recess 2130 includes the first recess edge 2131, the second recess edge 2132, and the third recess edge 2133, the first recess 2130 with the above structure can provide a large buffer space for the first conductive plate 30 in the event of mechanical abuse.

In some embodiments, the second electrode plate 22 can alternatively adopt a design similar to that of the first electrode plate 21. For example, a third region (for example, a blank region) is provided on the second current collector 220 of the second electrode plate 22 to be connected to the second conductive plate 40. The second electrode plate 22 is provided with a second recess at an end edge, and the third conductive material layer 221 corresponds to the third region being the blank region and is spaced apart from the first recess 2130 in the second direction D₂. Thus, this can further improve the space utilization and prolong the service life of the electrochemical device 100.

As shown in FIGs. 10A to 12, in some embodiments, in the first direction D₁, a thickness of the first conductive plate 30 is less than a thickness of the first conductive material layer 211. Therefore, after the first conductive plate 30 is connected to the first region 2100, the position with a larger thickness in the first electrode plate 21 having the first conductive plate 30 is the position of the first electrode plate 21 with a double-sided coating on both sides of the first region 2100 in the third direction D₃, that is, the first position P₁. Therefore, in the event of mechanical abuse, if the position to which the external force is applied overlaps with the weld mark of the first conductive plate 30, the first position P₁ can preferentially bear part of the external force. In addition, when viewed from the first direction D₁, the first position P₁ has a larger area than the second position P₂, which is conducive to bearing greater external force in the event of mechanical abuse, thereby further prolonging the service life of the electrochemical device 100.

As shown in FIGs. 3 and 10A to 12, in some embodiments, the electrochemical device 100 further includes a first layer 50 containing an insulating material. The first layer 50 is adhered to the first region 2100. The first conductive plate 30 is disposed between the first region 2100 and the first layer 50. The first layer 50 is used to cover the weld mark (such as the protrusion 30b) of the first conductive plate 30, thereby reducing the risk of the weld mark piercing the separator 23 and causing a short circuit. The first layer 50 may be a single-sided adhesive tape or a double-sided adhesive tape, and a specific material of the first layer 50 may be selected from at least one of polypropylene, polyethylene, poly(vinylidene difluoride), vinylidene difluoride-hexafluoropropylene copolymer, polymethyl methacrylate, or polyethylene glycol. In another embodiment, the first layer 50 may alternatively be a ceramic coating. In the first direction D₁, a thickness range of the first layer 50 may be 3 µm to 30 µm.

In some embodiments, when viewed from the first direction D₁, the first layer 50 fully covers the first opening 2110 and the first recess 2130, and also covers the first conductive material layer 211 located between the first opening 2110 and the first recess 2130. In addition, the first layer 50 extends beyond the first end edge 213 in the second direction D₂. Specifically, when viewed from the first direction D₁, the first layer 50 includes a first edge 51 and a second edge 52 disposed opposite to each other in the second direction D₂, and further includes a third edge 53 and a fourth edge 54 disposed opposite to each other in the third direction D₃. The first edge 51 and the second edge 52 can both extend along the third direction D₃. The third edge 53 and the fourth edge 54 can both extend along the third direction D₃. The third edge 53 is connected between the first edge 51 and the second edge 52, and the fourth edge 54 is connected between the first edge 51 and the second edge 52. The first edge 51 extends beyond the first end edge 213 in the second direction D₂. When viewed from the first direction D₁, the second edge 52 may be located between the sixth edge 2104 and the second end edge 214. The third edge 53 is located on the first side 30A of the first conductive plate 30, and in the third direction D₃, the first edge 2101 is located between the third edge 53 and the first conductive plate 30. The fourth edge 54 may be located on the second side 30B of the first conductive plate 30, and in the third direction D₃, the second edge 2102 is located between the fourth edge 54 and the first conductive plate 30. Thus, the first layer 50 can also cover the burrs generated at the first end edge 213 during cutting the first current collector 210, reducing the possibility of the burrs piercing the separator 23 and causing a short circuit due to contact with the second electrode plate 22. When viewed from the first direction D₁, the first layer 50 can also cover a part of the first conductive material layer 211. For ease of distinction, in FIG. 3, the first conductive material layer 211 covered by the first layer 50 and another first conductive material layer 211 are shown in different filling manners. However, it can be understood that this does not mean that the first conductive material layer 211 covered by the first layer 50 and the another first conductive material layers 211 are made of different active materials, and there is no clear boundary between the two. It can be understood that as shown in FIG. 7A, when the curved fourth recess edge 2134 and fifth recess edge 2135 are provided, the area of the first conductive material layer 211 located between the first opening 2110 and the first recess 2130 and capable of increasing the height is increased. This is also conducive to increasing a contact area between the first layer 50 and the first conductive material layer 211, and enhancing the connection strength of the first layer 50 on the first electrode plate 21.

As shown in FIGs. 5 and 10A to 12, the electrochemical device 100 further includes a second layer 60 containing an insulating material. The second layer 60 is adhered to the second region 2100'. The second layer 60 is used to cover the weld mark (such as the protrusion 210d), thereby reducing the risk of the weld mark piercing the separator 23 and causing a short circuit. In some embodiments, the second layer 60 may be a single-sided adhesive tape, a double-sided adhesive tape, or a ceramic coating.

As shown in FIGs. 3 and 5, in some embodiments, in the second direction D₂, a distance from the first connecting edge 213a to the third recess edge 2133 is a first distance L₁, a distance from the third recess edge 2133 to the first region 2100 is a second distance L₂, and L₂ is also a size of this part of the first conductive material layer 211 located between the first opening 2110 and the first recess 2130 in the second direction D₂. The first distance L₁ is greater than the second distance L₂ (L₁ > L₂). A large first distance L₁ is conducive to increasing an area of the first recess 2130 and allows the first recess 2130 to provide a large buffer space for the first conductive plate 30 in the event of mechanical abuse. In addition, it can be understood that a part of the first conductive material layer 211 located between the first opening 2110 and the first recess 2130 is covered by the first layer 50, and a material in this part of the first conductive material layer 211 is difficult to implement capacity utilization during charging and discharging. In addition, the first region 2100 needs to reserve a sufficient space in the second direction D₂ to be connected to the first conductive plate 30. Therefore, under a condition that a size of the first electrode plate 21 in the second direction D₂ is specified, when the second distance L₂ is small (the amount of an active material that is covered by the first layer 50 and is difficult to implement capacity utilization is reduced), a distance from the sixth edge 2104 to the second end edge 214 may be increased (that is, the amount of an active material that is located between the sixth edge 2104 and the second end edge 214, is not covered by the first layer 50, and is capable of implementing capacity utilization is increased), thereby reducing the influence on the capacity of the electrochemical device 100. In some other embodiments, the first distance L₁ may alternatively be less than the second distance L₂. In this case, since the second distance L₂ is large, the first conductive material layer 211 located between the first opening 2110 and the first recess 2130 can effectively increase the height.

It can be understood that as shown in FIG. 8, if the first recess 2130 is approximately V-shaped when viewed from the first direction D₁, the first distance L₁ is a distance in the second direction D₂ from the first connecting edge 213a to an intersection of the first recess edge 2131 and the second recess edge 2132. The second distance L₂ is a distance in the second direction D₂ from the intersection of the first recess edge 2131 and the second recess edge 2132 to the first region 2100.

When the first distance L₁ is greater than the second distance L₂, in some embodiments, a range of the first distance L₁ is 1 mm to 6 mm (1 mm ≤ L₁ ≤ 6 mm), and a range of the second distance L₂ is 0.3 mm to 4 mm (0.3 mm ≤ L₂ ≤ 4 mm), and 0.1 ≤ L₂/L₁ < 1. Setting the range of the first distance L₁ allows the first recess 2130 to provide a large buffer space for the first conductive plate 30 in the event of mechanical abuse. In addition, as compared with a situation where the first distance L₁ is large (that is, the area of the first recess 2130 is increased, and an area of the first conductive material layer 211 removed within the first recess 2130 is also increased), this application can reduce the influence on the capacity of the electrochemical device 100. Setting the range of the second distance L₂ allows the first conductive material layer 211 located between the first opening 2110 and the first recess 2130 to effectively increase the height. In addition, as compared with the situation where the second distance L₂ is large, this application can reduce the influence on the capacity of the electrochemical device 100. In some embodiments, a range of a ratio of the second distance L₂ to the first distance L₁ is 0.1 to 1. That is, 0.1 ≤ L₂/L₁ < 1. Setting a lower limit value of the ratio of the second distance L₂ to the first distance L₁ reduces the possibility that the first distance L₁ takes up a large proportion (the area of the first recess 2130 is large) or the size of this part of the first conductive material layer 211 located between the first opening 2110 and the first recess 2130 in the second direction D₂ is small. Therefore, this application can reduce the influence on the capacity of the electrochemical device 100 and also allows this part of the first conductive material layer 211 to effectively increase the height.

As shown in FIGs. 3 and 5, in some embodiments, when viewed from the first direction D₁, the first conductive plate 30 covers a middle position of the first recess 2130 in the third direction D₃. Therefore, in the third direction D₃, a distance from the first conductive plate 30 to the first recess edge 2131 is a third distance L₃, a distance from the first conductive plate 30 to the second recess edge 2132 is a fourth distance L₄, and the third distance L₃ is approximately equal to the fourth distance L₄. For example, a difference between the third distance L₃ and the fourth distance L₄ does not exceed ±1.5 mm. In some specific embodiments, a range of the third distance L₃ is 1 mm to 8 mm, and a range of the fourth distance L₄ is 1 mm to 8 mm. Thus, this allows the first recess 2130 to provide a sufficient buffer space for the first conductive plate 30 and also reduces the influence on the capacity of the electrochemical device 100 when the third distance L₃ or the fourth distance L₄ is excessively large.

It can be understood that as shown in FIG. 7B, if extending directions of the first recess edge 2131 and the second recess edge 2132 are not strictly parallel to the second direction D₂, the third distance L₃ is a maximum distance in the second direction D₂ from the first conductive plate 30 to the first recess edge 2131, and the fourth distance L₄ is a maximum distance in the second direction D₂ from the first conductive plate 30 to the second recess edge 2132. As shown in FIG. 8, if the first recess 2130 is approximately V-shaped when viewed from the first direction D₁, the third distance L₃ is the maximum distance in the second direction D₂ from the first conductive plate 30 to the first recess edge 2131. The fourth distance L₄ is the maximum distance in the second direction D₂ from the first conductive plate 30 to the second recess edge 2132.

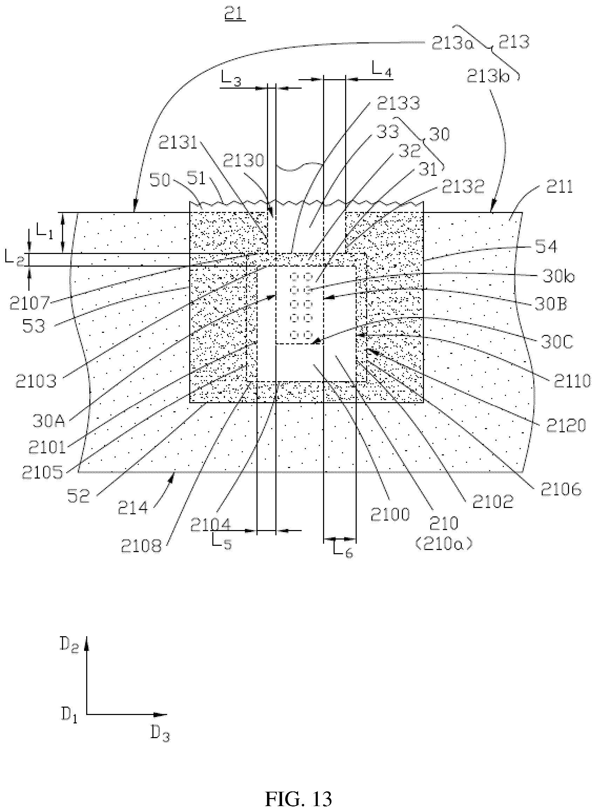

As shown in FIG. 13, in some other embodiments, when viewed from the first direction D₁, the first conductive plate 30 can alternatively deviate from the middle position of the first recess 2130 in the third direction D₃, so that the third distance L₃ is not equal to the fourth distance L₄. In some specific embodiments, the third distance L₃ may be less than the fourth distance L₄.

As shown in FIGs. 3 and 5, in some embodiments, when viewed from the first direction D₁, the first conductive plate 30 covers a middle position of the first region 2100 in the third direction D₃. Therefore, in the third direction D₃, a distance from the first edge 2101 to the first conductive plate 30 is a fifth distance L₅, a distance from the second edge 2102 to the first conductive plate 30 is a sixth distance L₆, and the fifth distance L₅ is approximately equal to the sixth distance L₆. For example, a difference between the fifth distance L₅ and the sixth distance L₆ does not exceed ±1.5 mm. The fifth distance L₅ and the sixth distance L₆ are actually the sizes of the first region 2100 exposed at the first connecting region 31 of the first conductive plate 30 in the third direction D₃. In some specific embodiments, a range of the fifth distance L₅ is 1 mm to 10 mm, and a range of the sixth distance L₆ is 1 mm to 10 mm. Thus, heat generated in the first connecting region 31 when the electrochemical device 100 is charged can be dissipated through the first region 2100 exposed at the first connecting region 31, reducing the possibility of local overheating of the first conductive plate 30, and reducing the influence on the capacity of the electrochemical device 100 when the fifth distance L₅ or the sixth distance L₆ is excessively large.

As shown in FIG. 13, in some other embodiments, when viewed from the first direction D₁, if the first conductive plate 30 deviates from the middle position of the first region 2100 in the third direction D₃, the fifth distance L₅ may alternatively be less than or greater than the sixth distance L₆. This is conducive to reducing the process requirements when the first conductive plate 30 is connected to the first region 2100.

As shown in FIGs. 3 and 5, in some embodiments, when the first recess 2130 covers only a part of the first region 2100 in the second direction D₂, the fourth distance L₄ is less than the sixth distance L₆. As shown in FIG. 6, in some other embodiments, when the first recess 2130 fully overlaps with the first region 2100 in the second direction D₂, the fourth distance L₄ may alternatively be approximately equal to the sixth distance L₆. For example, a difference between the fourth distance L₄ and the sixth distance L₆ does not exceed ±1.5 mm.

The first distance L₁ to the sixth distance L₆ can be respectively measured using a direct measurement method. The test steps are as follows: the electrochemical device 100 is disassembled, and the first electrode plate 21 is taken as a test sample; and a caliper or another suitable measuring tool is used to directly measure the values of the first distance L₁ to the sixth distance L₆, or an image of the first electrode plate 21 is collected and measurement is performed in the image.

As shown in FIGs. 3 to 5, in some embodiments, when viewed from the first direction D₁, the first region 2100 and the second region 2100' may be staggered in the third direction D₃. In some specific embodiments, when viewed from the first direction D₁, the first edge 2101 and the third edge 2105 are staggered with each other in the third direction D₃, and the second edge 2102 and the fourth edge 2106 are staggered with each other in the third direction D₃. The first edge 2101 and the third edge 2105 are staggered with each other, so that the first electrode plate 21 has thickness transitions at positions corresponding to the first edge 2101 and the third edge 2105. Similarly, the second edge 2102 and the fourth edge 2106 are staggered with each other, so that the first electrode plate 21 has thickness transitions at positions corresponding to the second edge 2102 and the fourth edge 2106. The above thickness transitions are conducive to reducing the possibility of the first current collector 210 undergoing damage such as wrinkles due to sudden pressure increase when the electrode plate is rolled, thereby reducing the possibility of poor appearance or poor internal interface of the electrochemical device 100. Furthermore, in the event of collision or extrusion due to the external force, the above thickness transitions can also reduce the possibility of tearing of the first current collector 210. Therefore, the service life of the electrochemical device 100 is prolonged.

Further, in some embodiments, when viewed from the first direction D₁, the second region 2100' fully covers the first region 2100. That is, when viewed from the first direction D₁, an area of the second region 2100' is greater than an area of the first region 2100, so that a projection of the first region 2100 in the first direction D₁ is fully located in a projection of the second region 2100'. Thus, when viewed from the first direction D₁, the weld mark (such as the depression 210c shown in FIG. 10A or the protrusion 210d shown in FIG. 10B) can fully fall within a range of the second region 2100', reducing the possibility of a conductive material falling off and causing a short circuit when the weld mark falls on the second conductive material layer 212, thereby prolonging the service life of the electrochemical device 100.

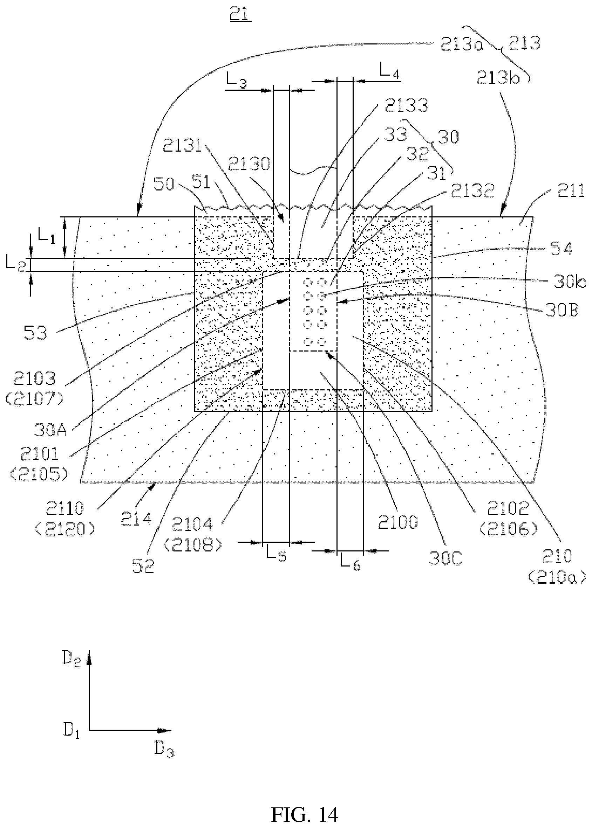

Referring to FIG. 14, in some other embodiments, when viewed from the first direction D₁, the first region 2100 may alternatively fully overlap with the second region 2100'. Specifically, when viewed from the first direction D₁, the first edge 2101 overlaps with the third edge 2105, the second edge 2102 overlaps with the fourth edge 2106, the fifth edge 2103 overlaps with the seventh edge 2107, and the sixth edge 2104 overlaps with the eighth edge 2108. In this case, when viewed from the first direction D₁, the area of the first region 2100 is equal to the area of the second region 2100'.

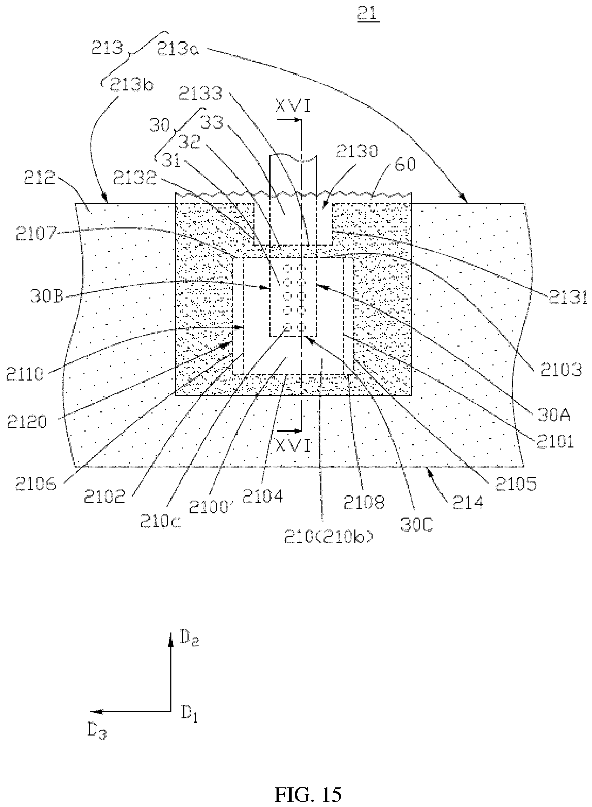

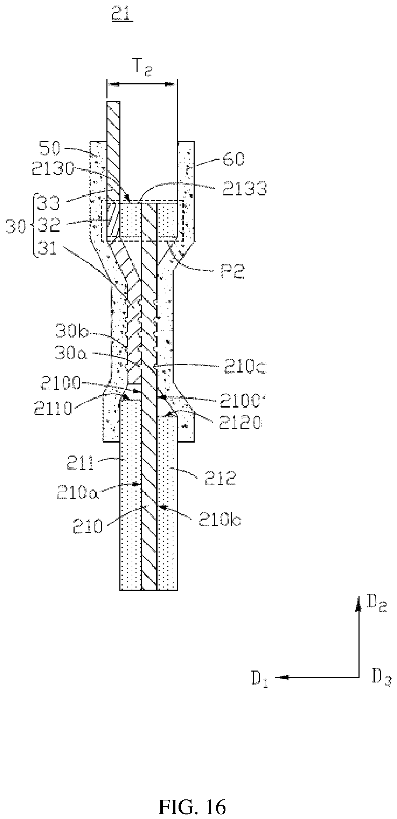

Referring to FIGs. 15 and 16, another embodiment of this application further provides an electrochemical device (not shown in the figure). The electrochemical device differs from the foregoing electrochemical device 100 in that in the first electrode plate 21, the second region 2100' is spaced apart from the first recess 2130 in the second direction D₂, so that a part of the second conductive material layer 212 is present between the second opening 2120 and the first recess 2130. Therefore, when viewed from the first direction D₁, the first electrode plate 21 located between the first opening 2110 and the first recess 2130 is a double-sided coating region.

As shown in FIG. 16, in this case, the thickness T₂ of the second position P₂ includes the total thickness of the first conductive plate 30, the first conductive material layer 211, the first current collector 210, and the second conductive material layer 212. In this case, at the second position P₂, this part of the second conductive material layer 212 located between the second opening 2120 and the first recess 2130 can also increase the height in the first direction D₁. When the external force is applied to the back of the electrochemical device 100 (that is, the housing 10 faces the second wall 112 of the second region 2100' as shown in FIG. 2A), this part of the second conductive material layer 212 can also bear part of the external force, reducing the possibility of the weld mark (such as the depression 210c or the protrusion 210d) piercing the separator 23 and causing a short circuit due to contact with the second electrode plate 22, thereby prolonging the service life of the electrochemical device.

The electrochemical device (such as the electrochemical device 100) of this application includes all devices capable of undergoing electrochemical reactions. Specifically, the electrochemical device includes all types of primary batteries, secondary batteries, fuel batteries, solar batteries, or capacitors (for example, super capacitors). Optionally, the electrochemical device may be a lithium secondary battery, including a lithium metal secondary battery, a lithium-ion secondary battery, a lithium polymer secondary battery, and a lithium-ion polymer secondary battery.

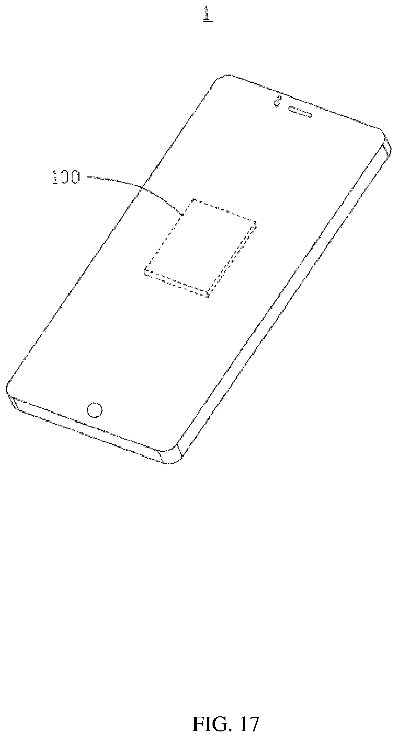

Referring to FIG. 17, an embodiment of this application further provides an electronic device 1, the electronic device 1 includes an electrochemical device (such as the electrochemical device 100). The electronic device 1 is powered by the electrochemical device 100, and the electrochemical device 100 has a long service life. The electrochemical device 100 of this application is applicable to electronic devices 1 in various fields. In an embodiment, the electronic device 1 of this application may be but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a timepiece, an electric tool, a flash lamp, a camera, a large household battery, a lithium-ion capacitor, and the like.

The following will describe this application in detail with reference to specific examples and comparative examples. An example in which the electrochemical device is used as a battery, the first electrode plate is used as a positive electrode, and the first conductive plate is used as a positive electrode conductive plate is used to describe this application with reference to specific test methods.

### Examples 1 to 9

Referring to FIG. 3, after cold pressing, the first opening 2110 was cleaned in the first conductive material layer 211 on the first electrode plate 21 through a laser cleaning manner, so that the first region 2100 was exposed at the first opening 2110. The first electrode plate 21 was provided with the first recess 2130 at the first end edge 213. When viewed from the first direction D₁, the first opening 2110 was spaced apart from the first recess 2130. Then, the first conductive plate 30 was welded to the first region 2100. The second electrode plate 22, the separator 23, and an electrolyte might be conventionally designed. The first electrode plate 21, the separator 23, and the second electrode plate 22 were stacked and then wound. The resulting product was placed in the housing, followed by electrolyte injection and packaging, to obtain a battery, where the first electrode plate 21 was a cathode electrode plate.

Examples 1 to 9 differed from each other in the value of the first distance L₁, the value of the second distance L₂, or the ratio of the second distance L₂ to the first distance L₁.

### Comparative example

This comparative example differed from Examples 1 to 9 in that the first electrode plate 21 was not provided with the first recess 2130.

20 batteries of each example and comparative example were respectively subjected to a blunt penetration test (also known as Dent test). The blunt penetration test included the following specific steps: (1) under an environmental condition of 25±5°C, the battery was charged to 100% SOC (State of Charge, state of charge); (2) a triangular bar extruder (model: DKBF-3KH, manufacturer: Dae Kyung) was used, a position, corresponding to the weld mark of the first conductive plate 30 on the front of the battery was extruded using a semi-circular headed nail with a diameter of 6 mm, and then the pressure increased to 1300 N at a speed of 300 N/min; and (3) whether the battery undergone failure was observed. A Dent pass rate was calculated using the following formula: Dent pass rate = the number of batteries passing the Dent test/the number of tested batteries. The results were recorded in Table 1.

**Table 1**

| | First recess | L₁ (mm) | L₂ (mm) | L₂/L₁ | Dent pass rate |
|---|---|---|---|---|---|
| Example 1 | Presence | 6 | 0.3 | 0.05 | 14/20 |
| Example 2 | Presence | 5 | 0.5 | 0.1 | 20/20 |
| Example 3 | Presence | 4 | 1.2 | 0.3 | 20/20 |
| Example 4 | Presence | 1 | 0.5 | 0.5 | 20/20 |
| Example 5 | Presence | 4 | 3 | 0.75 | 20/20 |
| Example 6 | Presence | 4 | 4 | 1 | 20/20 |
| Example 7 | Presence | 3 | 3 | 1 | 20/20 |
| Example 8 | Presence | 2 | 2 | 1 | 20/20 |
| Example 9 | Presence | 1.5 | 1.8 | 1.2 | 17/20 |
| Comparative example | Absence | Absence | Absence | Absence | 6/20 |

| | | | | | |
|---|---|---|---|---|---|
| Note: Dent pass rate X/20 means that the number of the batteries passing the Dent test in 20 tested samples is X. | | | | | |

It can be seen from the data in Table 1 that as compared with comparative example, in Examples 1 to 9, the first electrode plate 21 is provided with the first recess 2130. This part of the first conductive material layer 211 located between the first opening 2110 and the first recess 2130 can increase the height in the first direction D₁, and this part of the first conductive material layer 211 can bear part of the external force during the blunt penetration test. In addition, the semi-circular headed nail has a large diameter (greater than the width of the first conductive plate 30 in the third direction D₃), so that the position of the first electrode plate 21 with a double-sided coating on both sides of the first region 2100 during the blunt penetration test can also bear part of the external force. Therefore, the possibility of the weld mark piercing the separator 23 and causing a short circuit due to contact with the second electrode plate 22 is reduced, resulting in a high pass rate of the batteries of Examples 1 to 9 during the blunt penetration test. Furthermore, in Examples 1 to 9, the second distance L₂ in Example 1 takes up a small proportion, so that the value of L₂/L₁ is small. Therefore, the size in the second direction D₂ of this part of the first conductive material layer 211 between the first opening 2110 and the first recess 2130 is small, the size of this part of the first conductive material layer 211 capable of effectively increasing the height is reduced, and the pass rate of the batteries during the blunt penetration test is reduced. The first distance L₁ in Example 9 takes up a small proportion, so that the value of L₂/L₁ is large. Therefore, the area of the first recess 2130 that can provide the buffer space for the first conductive plate 30 is reduced, and the pass rate of the batteries during the blunt penetration test is reduced.

In conclusion, it should be noted that the foregoing embodiments are merely intended to describe the technical solutions of this application, but not intended to constitute any limitation. Although this application is described in detail with reference to preferred embodiments, persons of ordinary skill in the art should understand that modifications or equivalent replacements can be made to the technical solutions of this application, without departing from the spirit and scope of the technical solutions of this application.

## Claims

1. An electrochemical device, comprising an electrode assembly and a first conductive plate, wherein the electrode assembly comprises a first electrode plate, the first electrode plate comprises a first current collector and a first conductive material layer, the first current collector comprises a first surface, and the first conductive material layer is disposed on the first surface; wherein,
the first conductive material layer is provided with a first opening, the first surface comprises a first region, the first region is configured to be a region of the first surface exposed at the first opening, and the first conductive plate is connected to the first region; and
when viewed from a first direction, the first electrode plate comprises a first end edge and a second end edge disposed opposite to each other in a second direction, and the first electrode plate is provided with a first recess at the first end edge; when viewed from the first direction, the first recess is spaced apart from the first region; when viewed from the second direction, the first recess overlaps with the first region; when viewed from the first direction, the first conductive plate covers a part of the first region, the first conductive plate covers a part of the first conductive material layer, and the first conductive plate covers a part of the first recess; the first direction is perpendicular to the first region; and the second direction is perpendicular to the first direction.

2. The electrochemical device according to claim 1, wherein, when viewed from the first direction, the first recess comprises a first recess edge and a second recess edge disposed opposite to each other in a third direction, and a third recess edge connecting the first recess edge and the second recess edge; the first recess edge, the second recess edge, and the third recess edge enclose the first recess; and the third direction is perpendicular to both the first direction and the second direction.

3. The electrochemical device according to claim 2, wherein, when viewed from the first direction, the first end edge comprises a first connecting edge connecting to the first recess edge; the third recess edge and the first connecting edge both extend along the third direction; and in the second direction, a distance from the first connecting edge to the third recess edge is a first distance L₁, a distance from the third recess edge to the first region is a second distance L₂, and the first distance L₁ is greater than the second distance L₂.

4. The electrochemical device according to claim 3, wherein, 1 mm ≤ L₁ ≤ 6 mm, and 0.3 mm ≤ L₂ ≤ 4 mm.

5. The electrochemical device according to claim 4, wherein, 0.1 ≤ L₂/L₁ < 1.

6. The electrochemical device according to claim 2, wherein, when viewed from the first direction, the first recess further comprises a fourth recess edge and a fifth recess edge; the fourth recess edge connects the first recess edge and the third recess edge; the fifth recess edge connects the second recess edge and the third recess edge; the fourth recess edge has a curved shape; and the fifth recess edge has a curved shape.

7. The electrochemical device according to claim 1, wherein, in the first direction, a thickness of the first conductive plate is less than a thickness of the first conductive material layer.

8. The electrochemical device according to claim 2, wherein, when viewed from the first direction, in the third direction, a distance from the first conductive plate to the first recess edge is a third distance L₃, a distance from the first conductive plate to the second recess edge is a fourth distance L₄, and the third distance L₃ is not equal to the fourth distance L₄.

9. The electrochemical device according to claim 2, wherein, the first electrode plate further comprises a second conductive material layer; the first current collector further comprises a second surface opposite to the first surface; the second conductive material layer is disposed on the second surface; the second conductive material layer is provided with a second opening; the second surface comprises a second region; the second region is configured to be a region of the second surface exposed at the second opening; the first region overlaps with the second region in the first direction; and when viewed from the second direction, the second region overlaps with the first recess.

10. The electrochemical device according to claim 9, wherein, the second region is spaced apart from the first recess in the second direction.

11. The electrochemical device according to claim 10, wherein, when viewed from the first direction, the first region comprises a first edge and a second edge disposed opposite to each other in the third direction; the first edge and the first recess edge are located on a first side of the first conductive plate; the second edge and the second recess edge are located on a second side of the first conductive plate opposite to the first side; when viewed from the first direction, the second region comprises a third edge and a fourth edge disposed opposite to each other in the third direction; the first edge and the third edge are located on the first side of the first conductive plate; the second edge and the fourth edge are located on the second side of the first conductive plate; and when viewed from the first direction, the first edge and the third edge are staggered with each other, and/or the second edge and the fourth edge are staggered with each other.

12. The electrochemical device according to claim 11, wherein, when viewed from the first direction, the second region fully covers the first region.

13. The electrochemical device according to claim 9, wherein, the second region connects to the first recess.

14. The electrochemical device according to claim 1, wherein, the electrochemical device further comprises a first layer containing a first insulating material; the first layer is adhered to the first region; and the first conductive plate is disposed between the first region and the first layer.

15. The electrochemical device according to claim 14, wherein, when viewed from the first direction, the first layer fully covers the first opening and the first recess; and the first layer extends beyond the first end edge in the second direction.

16. The electrochemical device according to claim 1, wherein, the first conductive plate is welded to the first region.

17. The electrochemical device according to claim 1, wherein, the electrode assembly is a wound structure, and the first electrode plate is a positive electrode plate.

18. An electronic device, comprising the electrochemical device according to any one of claims 1 to 17.
